(19) Europäisches Patentamt
European Patent Office
Office européen des brevets

(11) Publication number: 0 167 266 B1

(12) # EUROPEAN PATENT SPECIFICATION

(45) Date of publication of patent specification: 02.08.89

(21) Application number: 85303738.0

(22) Date of filing: 28.05.85

(51) Int. Cl.$^4$: A 01 N 43/22, A 01 N 43/16, A 01 N 43/12 // (A01N43/22, 37:18),(A01N43/16, 37:18),(A01N43/12, 37:18)

(54) **Insect repellent composition and method of repelling insects.**

(30) Priority: 30.05.84 US 615521

(43) Date of publication of application: 08.01.86 Bulletin 86/02

(45) Publication of the grant of the patent: 02.08.89 Bulletin 89/31

(84) Designated Contracting States: BE DE FR GB NL

(56) References cited:
DE-B-1 007 555
US-A-2 991 220
US-A-4 064 268

R. WEGLER: "Chemie der Pflanzenschutz- und Schädlingsbekämpfungsmittel", vol. 1, 1970, pages 487-496, Springer Verlag, Berlin, DE; K.H. BÜCHEL: "Insekten-Repellents"

The file contains technical information submitted after the application was filed and not included in this specification

(73) Proprietor: ANGUS CHEMICAL COMPANY
2211 Sanders Road
Northbrook Illinois 60061 (US)

(72) Inventor: Coulston, Frederick
17 Woodlawn Avenue R.D. 2
Rensselaer New York 12144 (US)
Inventor: Korte, Friedrich W.A.G.K.
Sonnen/Strasse 2
Attenkirchen (DE)

(74) Representative: Knott, Stephen Gilbert et al
MATHISEN, MACARA & CO. The Coach House
6-8 Swakeleys Road
Ickenham Uxbridge Middlesex UB10 8BZ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 167 266 B1

Courier Press, Leamington Spa, England.

**Description**

The present invention is directed to insect repellent compositions comprising Deet (N, N-diethyl-meta-toluamide), and a class of bicyclic lactones having insect repellent activity.

The search for insect repellent compositions characterized by a combination of excellent repellent activity, high residual activity and relatively little or no toxicity to humans is a continuing one due to recognition of possible toxicity to humans or pets. Thus, relatively long-lasting repellent compositions, having essentially no toxic effects upon humans, are currently in great demand.

Generally, commercially available insect repellent compositions comprise an insect repellent compound in a carrier. The cost of the repellent composition is based, to a large extent, upon the cost of the relative amount if repellent compound included therein. Accordingly, any reduction of the relative amount of repellent compound in the carrier while still achieving a strong insect repellent activity will result in a relatively less expensive and desirable commercial product.

Further, relatively high concentrations of Deet may give rise to allergic reactions in some individuals, as it is well known that different individuals may exhibit significantly different allergic reactions to a given substance. Also, at a certain concentration of Deet, a particularly sensitive individual may begin to exhibit signs of allergic reaction, whereas the same individual may not exhibit such a sensitivity when exposed to a second composition which includes a lesser amount of Deet.

Moreover, the odor or oily nature of Deet may become undesirable to some individuals at relatively high concentrations.

Repellent substances are known to cause insects to be driven away from or to reject otherwise insect-acceptable food sources. Most known repellents are only mildly toxic. A few of the known repellents, in fact, are not active poisons at all, but rather, prevent damage to plants or animals by making insect food sources or living conditions unattractive or offensive.

Repellents may be in the form of gases (olfactory), liquids, or solids (gustatory). Some well-known insect repellents include: benzil; benzyl benzoate; 2,3,4,5-bis(butyl-2-ene) tetrahydrofural (MGK Repellent 11); butoxypolypropylene glycol; N-butylacetanilide; normal-butyl-6,6-dimethyl-5,6-dihydro-1,4-pyrone-2-carboxylate (Indalone); dibutyl adipate; dibutyl phthalate; di-normal-butyl succinate (Tabatrex); N, N-diethyl-meta-toluamide (also known as Delphone, Detamide, Autan, or, more simply, Deet); dimethyl carbate (*cis*-bicyclo-[2.2.1]-5-heptene-2,3-dicarboxylate); dimethyl phthalate; 2-ethyl-2-butyl-1,3-propanediol; 2-ethyl-1,3-hexanediol (Rutgers 612); di-normal-propyl isocinchomeronate (MGK Repellent 326); 2-phenylcyclohexanol; and normal-propyl N, N-diethylsuccinamate. Standard repellents for mosquitoes and ticks, are citronella oil, dimethyl phthalate, normal-butylmesityl oxide oxalate and 2-ethyl hexanediol-1,3. See Kirk-Othmer *Encyclopaedia of Chemical Technology,* Second Edition, Volume 11, pps. 724—728; and *The Condensed Chemical Dictionary,* Eighth Edition, Page 756.

Cost considerations, moreover, often become important when choosing an effective repellent. A number of the above-mentioned repellents are only effective in relatively concentrated form. Commercially available repellent products, which may include Deet as the active repellent ingredient thereof, may include as much as 5—30% (or more) repellent in a carier, based on total weight. U.S. patent 4,416,881 to McGovern et al., for example, discloses repellent concentrations of 6.25—25% repellent in a carrier. U.S. patent 4,419,360 to Smolanoff, in its test examples, discloses repellent concentrations of 5% repellent in a carrier.

Insecticides function by poisoning via oral ingestion of stomach (or other organ) poisons, by contact with the insect cuticle, or by fumigant action through the air. As is well known, the term "insect" refers to any member of a large group of invertebrate animals characterized, in the adult state (non-adult insect states include larva and pupa), by division of the body into head, thorax, and abdomen, three pairs of legs, and, often but not always, two pairs of membranous wings, viz., the dictionary definition of insects, in addition to including beetles, bees, flies, wasps and mosquitoes, also includes wood lice, mites and ticks.

As is well known, an insecticide is a type of pesticide designed to control insect life which is harmful to man. Such harm can be manifested either directly as disease vectors, or indirectly as destroyers of crops, food products, or textile fabrics. Several well-known insecticides include: inorganic compounds (such as arsenic, lead and copper); naturally occurring organic compounds (such as rotenone, pyrethrins, nicotine, copper naphthenate and petroleum derivatives); and synthetic organic compounds (such as DDT, dieldrin, endrin, chlordane, lindane, para-dichlorobenzene and parathion).

Another group of organic insecticides acts on the principle of metabolic inhibition and, accordingly, are known as antimetabolites. Besides direct application onto a plant so as to be directly contactable by an insect (e.g., an insect larva), certain antimetabolites can be fed to growing plants either as a nutrient or a non-nutritional ingredient therefor with the result being that such a host plant will incorporate the antimetabolite into its plant tissue and, upon transfer of the antimetabolite into the insect via ingestion, no longer serve as a food source for the insect. See Kirk-Othmer *Encyclopaedia of Chemical Technology,* 2nd Edition, published by John Willey & Sons, Inc., Volume 11, pps, 677—738 (1966); and *The Condensed. Chemical Dictionary,* 8th Edition, Published by Van Nostrand Reinhold Company, Paged 469—470 (1971).

It is thus generally well known that most insecticides are toxic to man in varying degrees.

In 1959, several investigators (viz., F. Korte, J. Falbe and A. Zschocke) of the Chemical Institute at Bonn University, West Germany, reported (in *Tetrahedron,* 1959, Volume 6, pp. 201—216) a number of generally

applicable methods for synthesizing a variety of bicyclic gamma- and delta-lactones, including the method for synthesizing D,L-Iridomyrmecin. In the Korte asrticle, it was noted that some of the therein-disclosed compounds exhibited insecticidal properties. (One of the investigators, Korte, it will be noted, is a named coinventor herein.) It was only recently (1982), however, that the insecticidal properties of Iridomyrmecin and a number of the other bicyclic lactones discussed in the *Tetrahedron* article were studied in somewhat greater detail by us.

Prior Art

Certain substances which enhance or otherwise augment the repellent activity of Deet are well known.

For example, in U.S. patent 4,427,700 to Retnakaran, it has been noted that a significant enhancement of repellent activity against the black fly (*Simulium venustum* Say, and *Prosimulium hirtipes* Fries) has been obtained by the addition of vanillin (also known as 4-hydroxy-3-methoxybenzaldehyde), in relatively minor proportion, to Deet. It will be noted that vanillin, by itself, is not known to possess insect repellent activity. (See *The Merck Index,* 9th Ed., p. 1275, No. 9591.)

It is further known that certain Deet-based repellent compositions include additives which seem to enhance the repellent activity of Deet. During the course of our experimental work in connection with this invention, we have learned of five such known Deet-based repellent composition additives. See Table I. Some, but not all, of these additives are known to exhibit insect repellent activity.

TABLE I

| Additive Number | Additive Name |
|---|---|
| 1 | Allethrins[1] |
| 2 | Dimethyl Phthalate[2] |
| 3 | Di-normal-propyl isocinchomeronate[2] |
| 4 | Normal-octyl bicycloheptene dicarboximide |
| 5 | 2,3:4,5-bis (2-butylene) tetrahydro-2-furaldehyde[3] |

From Table I it is readily apparent that the chemical structures provide no basis for predicting whether an additive will or will not enhance the repellent activity of Deet.

[1]. The allethrins (there are two: namely, Allethrin I and Allethrin II), also known as the allyl cinerins, are the synthetic analogs of the naturally-occurring insecticides cinerin, jasmolin, and pyrethrin. Allethrin I is 2,2-dimethyl-3-(2-methyl-1-propenyl)cyclopropanecarboxylic acid 2-methyl-4-oxo-3-(2-propenyl)-2-cyclopenten-1-yl ester. Allethrin II is 3-(3-methoxy-2-methyl-3-oxo-1-propenyl)-2,2-dimethylcyclopropane-carboxylic acid 2-methyl-4-oxo-3-(2-propenyl)-2-cyclopenten-1-yl ester. (See *The Merck Index,* 9th Edition, published (1976) by Merck Co., Inc., page 36, No. 242.)

[2]. Well-known repellent, briefly discussed above.

[3]. A well-known repellent, briefly discussed above. (See MGK repellent II.)

It will be noted also that none of the Deet-based repellent composition additives indicated above in Table I is a lactone of the type we disclose herein.

It was pointed out in US—A—4 427 700, that Deet, by itself, is primarily effectively used only against mosquitoes, as it (Deet) is known to possess only mediocre repellent activity against a variety of other commonly-encountered bothersome insects, e.g., black flies (col. 1, 11. 36—38).

It is therefore a general object of this invention to provide effective repellents against a wide variety of insects, including ants, fleas, flies and mosquitoes, which are substantially non-toxic or only mildly toxic to humans.

The invention provides a potentiated insect repellent composition comprising: N,N-diethyl-meta-toluamide and a compound of the formula:

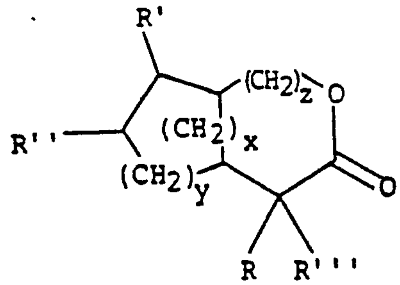

or the corresponding unsaturated compound thereof having the formula:

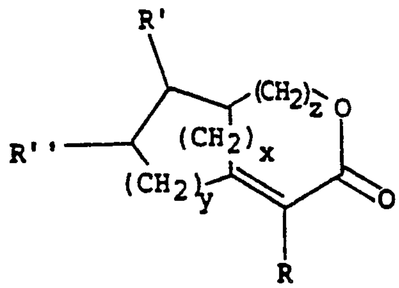

wherein R, R′, and R″ each are lower alkyl (e.g. $C_1$—$C_4$) or hydrogen, and R‴ when present is either lower alkyl or hydrogen; and wherein y is an integer from 1—3, and x and z each are 0 or 1, with the proviso that y is 1 or 2 when x is 1. Preferably, R, R′, R″ and R‴ each are hydrogen or methyl. Also preferably, the composition further comprises a carrier.

A potentiated insect repellent composition, as the term is used herein, means a repellent composition which produces a result substantially in excess of that which reasonably could be expected or predicted from the known effect of the components either alone or additively.

The combination of Deet with the Iridomyrmecin derivatives disclosed herein provides such a potentiated effect. It is not entirely clear to us whether the Deet is being potentiated by the Iridomyrmecin derivative, or the reverse effect, or both. It makes no difference, however, since the result is a strong, effective, relatively less expensive and relatively less toxic repellent composition. The result was unpredictable and surprising.

The foregoing, as well as other objects, features and advantages of the present invention will become more readily understood upon reading the following detailed description of the preferred embodiments.

Preferably, the repellent composition comprises Deet, a carrier, and about 0.00001—10 weight percent of a bicyclic lactone of the class shown on Table II. More preferably, the composition comprises 0.0001—5 weight percent of a Table II bicyclic lactone, and up to 5 weight percent Deet, in a carrier. Most preferably, the composition contains only about 0.001—1.5 weight percent of a bicyclic lactone of the class shown on Table II and less than 5 weight percent Deet therein.

Values of structural variables of the preferred bicyclic lactones, and abbreviations used throughout this application to refer to such lactones, appear below in Table II:

TABLE II

| Abbreviation | Compound is | Values of Structural Variables x | y | z | R | R′ | R″ | R‴ |
|---|---|---|---|---|---|---|---|---|
| CIC—2 | sat. | 0 | 1 | 1 | $CH_3$ | $CH_3$ | H | H |
| CIC—3a | sat. | 0 | 2 | 1 | $CH_3$ | H | H | H |
| CIC—4 | sat. | 0 | 2 | 1 | H | H | H | H |
| CIC—5 | unsat. | 0 | 2 | 1 | $CH_3$ | H | H | non. |
| CIC—6 | sat. | 0 | 1 | 1 | H | H | H | H |
| CIC—7 | unsat. | 0 | 2 | 1 | H | H | H | non. |
| CIC—8 | sat. | 0 | 1 | 1 | $CH_3$ | H | H | H |
| CIC—9 | unsat. | 0 | 1 | 1 | H | H | H | non. |
| CIC—10 | unsat. | 0 | 1 | 1 | $CH_3$ | H | H | non. |
| CIC—20 | sat. | 0 | 2 | 0 | $CH_3$ | H | H | H |
| CIC—21 | sat. | 0 | 2 | 0 | $CH_3$ | H | $CH_3$ | H |
| CIC—22 | sat. | 0 | 2 | 0 | $CH_3$ | $CH_3$ | H | H |
| CIC—23 | sat. | 1 | 1 | 0 | $CH_3$ | H | H | H |
| CIC—24 | sat. | 1 | 1 | 0 | $CH_3$ | H | $CH_3$ | H |
| CIC—25 | sat. | 1 | 1 | 0 | $CH_3$ | $CH_3$ | H | H |
| CIC—26 | sat. | 0 | 3 | 1 | $CH_3$ | H | H | $CH_3$ |

sat.=saturated unsat.=unsaturated
non.=nonexistent

Somewhat more widely-recognizable names for these compounds are as follows. CIC—2 is known as alpha-(2-hydroxymethyl-3-methyl-cyclopentyl) propionic acid lactone. Its trivial name is Iridomyrmecin. CIC—3a is known as alpha-(2-hydroxymethyl-cyclohexyl) propionic acid lactone. CIC—4 is known as (2-hydroxymethylcyclohexyl) acetic acid lactone. CIC—5 is known as alpha-(2-hydroxymethyl-cyclohexylidene) propionic acid lactone. CIC—6 is known as (2-hydroxymethyl-cyclopentyl) acetic acid lactone. CIC—7 is known as (2-hydroxymethyl-cyclohexylidene) acetic acide lactone (see, B. Belleau, *Canadian Journal of Chemistry, 35,* 673 (1957)). CIC—8 is known as alpha-(2- hydroxymethyl-cyclopentyl) propionic acid lactone. CIC—9 is known as (2-hydroxymethyl-cyclopentylidene) acetic acid lactone. CIC—10 is known as alpha-(2-hydroxymethyl-cyclopentylidene) propionic acid lactone. CIC—20 is known as alpha-(2-hydroxycyclohexyl) propionic acid lactone. CIC—21 is known as alpha-(2-hydroxy-4-methylcyclohexyl) propionic acid lactone. CIC—22 is known as alpha-(2-hydroxy-3-methylcyclohexyl) propionic acid lactone. CIC—23 is known as alpha-(3-hydroxy-cyclohexyl) propionic acid lactone. CIC—24 is known as alpha-(3-hydroxy-4-methylcyclohexyl) propionic acid lactone. CIC—25 is known as alpha-(3-hydroxy-3-methylcyclohexyl) propionic acid lactone. CIC—26 is known as alpha-(2-hydroxycycloheptyl) alpha, alphadimethyl propionic acid lactone.

The class of bicyclic lactones shown in Table II, including methods of synthesis thereof and tests demonstrating the insect repellent activities thereof, are discussed and disclosed in our European Patent Application No. EP.A.0167265 (entitled *INSECT REPELLENT*). Bicyclic lactones (Table II) of such a class were recently discovered by us to have effective insect repellent activity. The Table II lactones, and the repellent compositions of the present invention, were moreover recently discovered by us to be effective non-contact repellents, viz., the insect is repelled, usually without having made contact with the repellent composition or host.

The nomenclature used in this patent has been used in the literature (including the *Tetrahedron* article briefly referred to above) and throughout the Chemical Abstracts up to 1966. After 1967, the Chemical Abstracts generally have used and now use the following names for the underlying CIC chemical skeletal structure, with the noted exception.

| CHEMICAL SKELETAL STRUCTURE | CHEMICAL ABSTRACTS NAME |
|---|---|
| 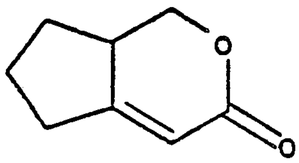 | 5,6,7,7a-Tetrahydrocyclopenta[c] pyran-3 (1H)-one |
| 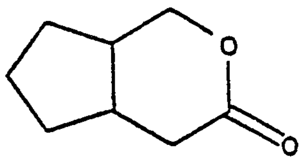 | Hexahydrocyclopenta[c] pyran-3 (1H)-one |
| 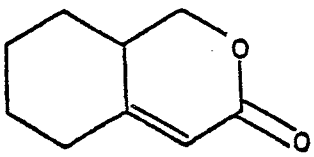 | 1,5,6,7,8,8a-Hexahydro-3H-2-benzopyran-3-one |
| 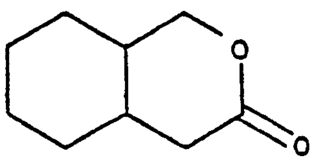 | Hexahydro-3-isochromanone (up to 1972), (and after 1972) 1,1,4,5,6,7,8,8a-Octahydro-3H-2-benzo-pyran-3-one |
| 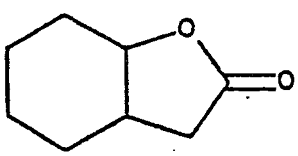 | Hexahydro-2(3H)-benzofuranone |
| 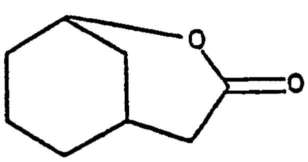 | 2-Oxabicyclo [3.3.1] nonan-3-one |
| 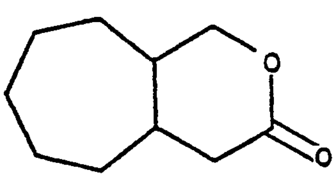 | Hexahydrocyclohepta [c] pyran-3(1H)-one |

Methods of Use

A method of using the repellent composition (of the present invention) to repel an insect from a situs comprises applying to such situs an effective amount of the repellent composition for thereby repelling the insect from the situs. Preferably, the repellent composition is used in combination with a carrier. Some carriers, it will be noted, can themselves have repellent properties.

The term "situs", as it is used throughout this application, will be understood to mean a position or location on specified plant or animal cells (or tissue) including a portion or location proximate or adjacent thereto.

The repellent compositions of the present invention thus can be formulated without a carrier or they can include suitable carriers for bringing the active (insect repellent) material into position for repelling common insect pests such as roaches, moths, house and stable flies, termites, flower beetles, bean beetles, weevils, ticks, chinch bugs, lice, ants, chiggers and mosquitoes.

Insects can be repelled by contacting the surfaces, on which such insects may alight or crawl, with a liquid, solid, or semi-solid composition. Such contact can be accomplished directly, e.g, by dispersing the composition into the air as by a liquid mist, in a manner such that the composition will fall on desired surfaces.

By way of further example, insect-infested animals, such as dogs with fleas, poultry with lice, cows with ticks, or monkeys (or other primates such as humans) with mosquitoes, can be treated with the insect repellent composition of the present invention, by contacting the skin, fur or feathers of such an animal with an effective amount of the composition for repelling the insect from the animal.

By way of yet further example, granaries and grain storage facilities such as silos ca be treated with relatively minute effective amounts of the repellent composition (of the present invention), preferably prior to grain storage, to prevent beetle, weevil, and other insect infestations, otherwise present in the grain, thereby permitting such grain satisfactorily to be stored without fear of insect destruction.

In addition, food-packaging containers, including fiber, cardboard, and wooden shipping containers, storage bins and flour sacks can be treated with relatively minute effective amounts of the composition of the present invention to prevent insect infestation.

The composition is usually applied directly by hand to the skin (of a person) or clothing area to be protected, but can also be mechanically sprayed on (as by an aerosol device). Alternatively, the active ingredients can be formulated into a paste or spreadable solid and applied from a tube or jar. Additional exemplary uses are discussed below.

Carriers

In the present invention, a variety of carriers (or diluents) for the above-disclosed insect repellent compositions can be used.

The carrier used can be any carrier conventionally used in insect repellent formulations. The carrier is preferably one that will not be harmful to the environment.

Accordingly, the carrier can be any one of a variety of commercially available organic and inorganic liquid, solid, or semi-solid carriers or carrier formulations usable in formulating insect repellent products.

Examples of organic liquid carriers include liquid aliphatic hydrocarbons such as pentane, hexane, heptane, nonane, decane and their analogs, as well as liquid aromatic hydrocarbons. Examples of other liquid hydrocarbons include oils produced by the distillation of coal and the distillation of various types and grades of petrochemical stocks, including kerosene oils which are obtained by fractional distillation of petroleum.

Other petroleum oils include those generally referred to (in the art) as agricultural spray oils, the so-called light and medium spray oils, consisting of middle fractions in the distillation of petroleum, and which are only slightly volatile. Such oils are usually highly refined and may contain only minute amounts of unsaturated compounds. Such oils are generally paraffin oils and accordingly can be emulsified with water and an emulsifier, diluted to lower concentrations, and used as sprays. Tall oils, usually obtained from sulfate digestion of wood pulp, can similarly be used.

Other organic liquid carriers can include liquid terpene hydrocarbons and terpene alcohols such as alpha-pinene, dipentene and terpineol.

In addition to the above-mentioned liquid hydrocarbons, the carrier can contain conventional emulsifying agents which can be used for causing the bicyclic lactone or Deet or both to be dispersed in, and diluted with, water for end-use application.

Still other liquid carriers can include organic solvents such as aliphatic and aromatic alcohols, esters, aldehydes, and ketones. Suitable aliphatic monohydric alcohols include methyl, ethyl, normal-propyl, isopropyl, normal-butyl, sec-butyl, and tert-butyl alcohols. Suitable dihydric alcohols include glycols (such as ethylene and propylene glycol) and the pinacols (alcohols having the empirical formula $C_6H_{12}(OH)_2$). Suitable polyhydroxy alcohols include glycerol, arabitol, erythritol and sorbitol. Suitable cyclic alcohols include cyclopentyl and cyclohexyl alcohols.

Conventional aromatic and aliphatic esters, aldehydes, and ketones can be used as carriers, and occasionally are used in combination with the above-mentioned alcohols.

Still other liquid carriers which include relatively high-boiling petroleum products such as mineral oil, and higher alcohols (such as cetyl alcohol) can similarly be used.

Additionally, conventional or so-called "stabilizers", such as tert-butyl sulfinyl dimethyl dithiocarbonate, can be used in conjunction with, or as a component of, the carrier or carriers comprising the composition of the present invention.

Solid carriers which can be used in the composition of the present invention include finely divided organic and inorganic solid materials. Suitable finely divided solid inorganic carriers include siliceous minerals such as clay, bentonite, attapulgite, fuller's earth, diatomaceous earth, kaolin, mica, talc and finely divided quartz, as well as synthetically prepared siliceous materials, such as silica aerogels and precipitated and fume silicas.

Examples of finely divided solid organic materials include cellulose, sawdust and synthetic organic polymers.

Examples of semi-solid or colloidal carriers include waxy solids, gels (such as petroleum jelly) and lanolin, and mixtures of well-known liquid and solid substances which can provide semi-solid carrier products, for providing effective repellency within the scope of the instant invention.

Potentiated Repellents

Commercially-available Deet-based insect-repellent compositions generally include a carrier. An exception is DEEP WOODS, a commercially available variety of Deet, which does not. Rather, it comprises 95 weight percent N, N-diethyl-meta-toluamide, the remaining 5 percent being the ortho- and para-toluamide isomers thereof. As was pointed out above in discussion directed to the U.S. patent 4,427,700 to Retnakaran, Deet, by itself, is a well-known mosquito repellent but is otherwise not very effective against a variety of other insects, such as black flies.

From the test data of Table III (presented below) it is clear that the overall repellent effect of the insect repellent composition of the present invention is greater than the sum of the repellent activities of Deet and a bicyclic lactone (of the class shown in Table II), taken individually.

TABLE III

| Repellent Compositions Comprising the Following Repellent Compound(s)[1] | %[2] | Total[3] % | [4]mg/cm$^2$ | Time of Repellent Activity (h:min) | Remarks |
|---|---|---|---|---|---|
| CIC—2 | 0.25 | 0.25 | 0.066 | <1:00 | many bit, test then terminated |
| Deet | 0.25 | 0.25 | 0.066 | <1:00 | many bit, test then terminated |
| CIC—2 and<br>Deet | 0.25<br>0.25 | 0.50 | 0.132 | 4:30 | 6/30 bit and terminated |
| CIC—2 | 0.50 | 0.50 | 0.132 | 3:00 | 15/26 bit |
| Deet | 0.50 | 0.50 | 0.132 | 3:00 | 4/27 bit |
| CIC—2 and<br>Deet | 0.50<br>0.50 | 1.00 | 0.263 | 7:00 | 11/27 bit |
| CIC—3a and<br>Deet | 0.50<br>0.50 | 1.00 | 0.263 | 8:30 | a few bit, test then terminated |

[1] As tested on Rhesus monkeys against *Aedes aegypti* (mosquitoes).
[2] Individual weight percentages of respective compounds in carrier.
[3] Total weight per cent of repellent compounds in carrier.
[4] Approximate quantity of repellent compound(s), based on total weight percentage, per monkey-skin surface area.

It is apparent from Table III that a composition (or mixture) which includes at least one bicyclic lactone of the class shown in Table II in combination with Deet has been found to have insect repellent activity greater than the additive repellent effect that would be achieved from adding the respective repellencies of the lactone and Deet. For example, considering the individual repellencies of the respective 0.25 weight percentages of CIC—2 and Deet in a carrier (as presented above in Table III), wherein the CIC—2 bicyclic lactone repellent and Deet compounds are shown, individually, to have repellent activities of less than one

hour, it was unexpected and surprising to us to discover that a composition containing 0.25 weight percent of each of ClC—2 and Deet in a carrier yielded an insect repellent composition having an activity lasting four and one-half hours.

Similarly, 0.50 weight percent of Deet or ClC—2 alone provided repellency for 3 hours but, in combination, they provide 7 hours. And, 0.25 weight percent of each in combination (total 0.50 weight percent) provided repellent activity 50 percent greater than obtained from 0.50 weight percent of either one alone.

Testing Procedures

The experimental procedures for Table III can be briefly summarized as follows: One milliliter of solution comprising each one of the Table III repellent compositions was initially applied to monkey stomach tissue with a cotton swab. (Each such surface to which a composition was applied was somewhat circular and about 10.16 cm (four inches) in diameter.) Additional 0.2 milliliter quantities were used to saturate the swab. In some tests, the carrier solution was 50% aqueous acetone. In other tests, the carrier solution was aqueous 95% ethanol. During our repellency tests (in connection with the prsent invention), no noted differences as between the alcohol or acetone carriers were observed.

In our European Patent Application No. EP—A—0167265 mentioned above, we have shown that bicyclic lactones of the class shown in Table II are effective repellents against a wide variety of insects, including *Solenopsis invicta* (the imported Fire Ant); *Aedes aegypti, Anopheles quadrimaculatus, Anopheles albimanus, Culex salinarius* and *Culex nigripalpus* (different species of mosquitoes); *Stomoxys calcitrans* (stable fly); *Drosophila* (fruit fly); and *Xenopsylla cheopsis* (oriental rat flea).

**Claims**

1. A potentiated insect repellent composition comprising: N, N-diethyl-meta-toluamide and a compound of the formula:

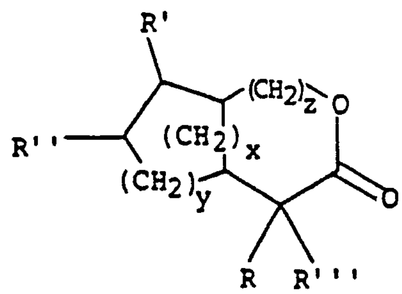

or the corresponding unsaturated compound thereof having the formula:

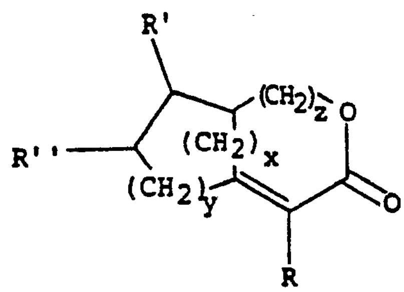

wherein R, R′, and R″ each are lower alkyl or hydrogen; and R‴ when present is either lower alkyl or hydrogen; and wherein y is an integer from 1—3, and x and z each are 0 or 1, with the proviso that y is 1 or 2 when x is 1.

2. The composition of claim 1, further including a carrier.

3. The composition of claim 1 wherein R, R′, R″ and R‴ each are hydrogen or methyl.

4. The composition of claim 2 wherein said composition comprises about 0.001—1.5 weight percent of said compound in said carrier.

5. The composition of claim 2 wherein said composition has up to about 5 weight percent of N, N-diethyl-meta-toluamide in said carrier.

6. The composition of claim 2 wherein said carrier comprises a waxy solid, gel or colloidal liquid, said carrier having N, N-diethyl-meta-toluamide and the compound or the unsaturated compound dispersed therein.

7. The composition of claim 2 wherein said carrier is an aqueous ethanol or acetone solution.

8. A method of repelling insects from a situs comprising applying to said situs an effective amount to repel said insects of a composition comprising N, N-diethyl-meta-toluamide and a compound of the formula:

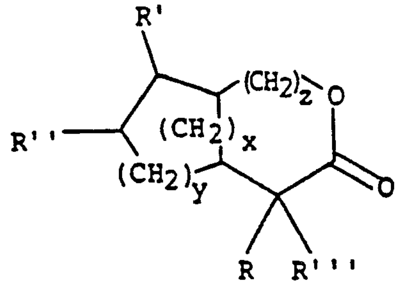

or the corresponding unsaturated compound thereof having the formula:

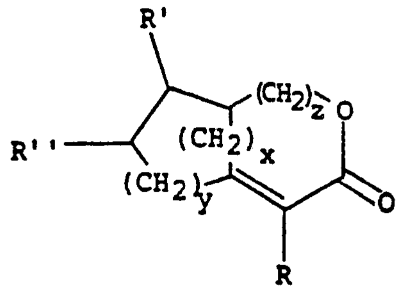

wherein R, R′, and R″ each are lower alkyl or hydrogen, and R‴ when present is either lower alkyl or hydrogen; and wherein y is an integer from 1—3, and x and z each are 0 or 1, with the proviso that y is 1 or 2 when x is 1.

9. The method of claim 8 wherein said composition further includes a carrier.

10. The method of claim 8 wherein R, R′, R″ and R‴ each are hydrogen or methyl.

11. The method of claim 9 wherein said composition comprises about 0.001—1.5 weight percent of said compound or said unsaturated compound in said carrier.

12. The method of claim 9 wherein said composition has up to about 5 weight percent of N, N-diethyl-meta-toluamide in said carrier.

**Patentansprüche**

1. Potenzierte insektenabweisende Zusammensetzung, umfassend N, N-Diethyl-meta-toluamid und eine Verbindung der Formel

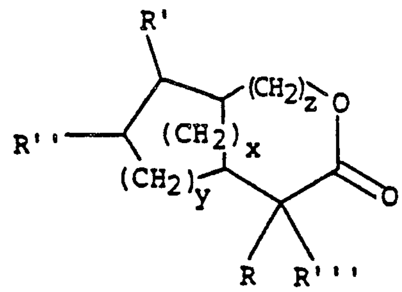

oder die entsprechende ungesättigte Verbindung davon mit der Formel

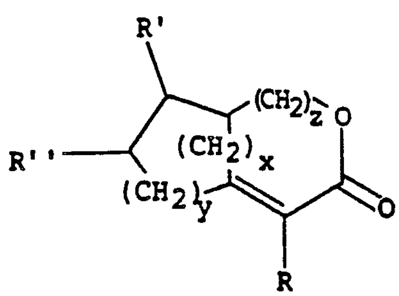

worin R, R′, R″ jeweils Niedrigalkyl oder Wasserstoff sind und R‴, wenn vorliegend, entweder Niedrigalkyl oder Wasserstoff ist und worin y eine ganze Zahl von 1—3 ist und x und z jeweils 0 oder 1 sind, mit der Maßgabe, daß y 1 oder 2 ist, wenn x 1 ist.

2. Zusammensetzung nach Anspruch 1, welche weiterhin einen Träger einschließt.

3. Zusammensetzung nach Anspruch 1, worin R, R′, R″ und R‴ jeweils Wasserstoff oder Methyl sind.

4. Zusammensetzung nach Anspruch 2, worin die Zusammensetzung etwa 0,001—1.5 Gew.% der Vebindung in dem Träger umfaßt.

5. Zusammensetzung nach Anspruch 2, worin die Zusammensetzung bis zu etwa 5 Gew.-% N, N-Diethyl-meta-toluamid in den Träger enthält.

6. Zusammensetzung nach Anspruch 2, worin der Träger einen wachsartigen Feststoff, ein Gel oder einen kolloidale Flüssigkeit umfaßt, wobei der Träger N, N-Diethyl-meta-toluamid und die Verbindung oder die ungesättigte Verbindung darin dispergiert enthält.

7. Zusammensetzung nach Anspruch 2, worin der Träger eine wässrige Ethanol- oder Acetonlösung ist.

8. Verfahren zum Abweisen von Insekten von einen Situs, bei dem zum Abweisen der Insekten auf den Situs eine wirksame Menge einer Zusammensetzung, umfassend N, N-Diethyl-meta-toluamid und eine Verbindung der Formel

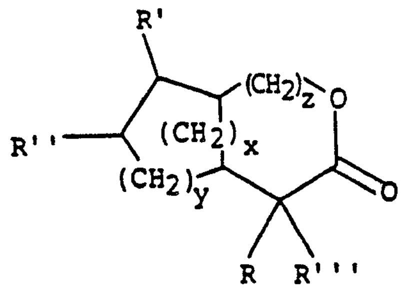

oder die entsprechende ungesättigte Verbindung davon mit der Formel

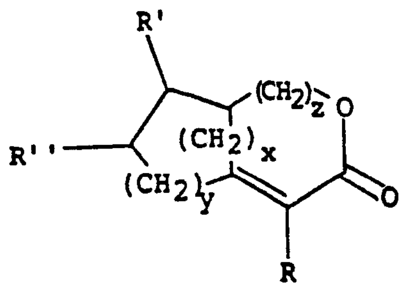

worin R, R′ und R″ jeweils Niedrigalkyl oder Wasserstoff sind und R‴, wenn vorliegend, entweder Niedrigalkyl oder Wasserstoff ist und worin y eine ganze Zahl von 1—3 ist und x und z jeweils 0 oder 1 sind, mit der Maßgabe, daß y 1 oder 2 ist, wenn x 1 ist, aufgebracht wird.

9. Verfahren nach Anspruch 8, worin die Zusammensetzung weiterhin einen Träger einschließt.

10. Verfahren nach Anspruch 8, worin R, R′, R″ und R‴ jeweils Wasserstoff oder Methyl sind.

11. Verfahren nach Anspruch 9, worin die Zusammensetzung etwa 0,001—1,5 Gew.-% der Verbindung oder der ungesättigten Verbindung in dem Träger umfaßt.

12. Verfahren nach Anspruch 9, worin die Zusammensetzung bis zu etwa 5 Gew.-% N, N-Diethyl-meta-toluamid in dem Träger enthält.

**Revendications**

1. Composition répulsive contre les insectes potentialisée comprenant: du N,N-diéthyl-méta-toluamide et un composé de la formule:

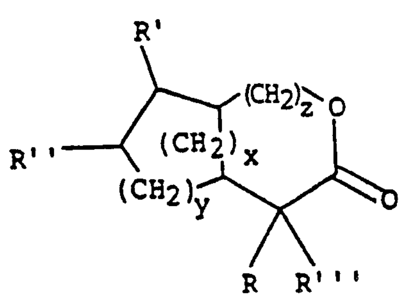

ou son composé insaturé correspondant répondant à la formule:

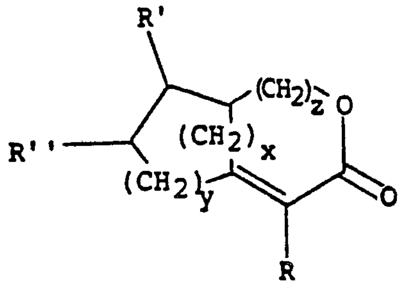

dans laquelles R, R′ et R″ représentent chacun un alkyle inférieur ou de l'hydrogène et R‴, lorsqu'il est présent, représente soit un alkyle inférieur soit de l'hydrogène, et dans lesquelles y est un nombre entier de 1—3 et x et z valent chacun 0 ou 1, à la condition que y soit égal à 1 ou 2 lorsque x vaut 1.

2. Composition suivant la revendication 1, comprenant en outre un support.

3. Composition suivant la revendication 1, caractérisée en ce que R, R′, R″ et R‴ représentent chacun de l'hydrogène ou du méthyle.

4. Composition suivant la revendication 2, caractérisée en ce qu'elle comprend environ 0,001—1.5% en poids de ce composé dans le support.

5. Composition suivant la revendication 2, caractérisée en ce qu'elle contient jusqu'à environ 5% en poids de N,N-diéthyl-méta-toluamide dans le support.

6. Composition suivant la revendication 2, caractérisée en ce que le sdupport comprend un solide cireux, du gel ou un liquide colloïdal, ce support contenant le N,N-diéthyl-méta-toluamide et le composé ou le composé insaturé à l'état dispersé.

7. Composition suivant la revendication 2, caractérisée en ce que le support est une solution aqueuse d'éthanol ou d'acétone.

8. Procédé pour repousser les insectes d'un site, comprenant l'application à ce site d'une quantité efficace pour repousser ces insectes d'une composition comprenant du N,N-diéthyl-méta-toluamide et un composé de la formule;

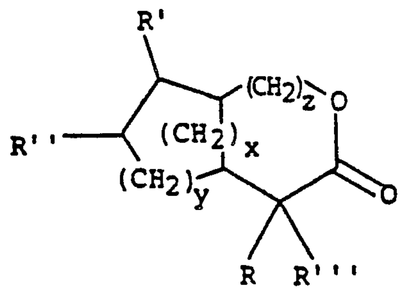

ou son composé insaturé correspondant répondant à la formule:

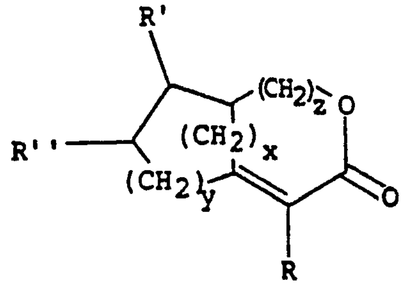

dans lesquelles R, R′, R″ représentent chacun un alkyle inférieur ou de l'hydrogène et R‴, lorsqu'il est présent, représente soit un alkyle inférieur soit de l'hydrogène, et dans lesquelles y est un nombre entier de 1—3 et x et z valent chacun 0 ou 1, à condition que y soit égal à 1 ou 2 lorsque x vaut 1.

9. Procédé suivant la revendication 8, caractérisé en ce que la composition comprend en outre un support.

10. Procédé suivant la revendication 8, caractérisé en ce que R, R′, R″ et R‴ représentent chacun de l'hydrogène ou du méthyle.

11. Procédé suivant la revendication 9, caractérisé en ce que la composition comprend environ 0,001—1.5% en poids de ce composé ou de ce composé insaturé dans le support.

12. Procédé suivant la revendication 9, caractérisé en ce que la composition contient jusqu'à environ 5% en poids de N,N-diéthyl-méta-toluamide dans le support.